Europäisches Patentamt

**European Patent Office**

Office européen des brevets

(19)

(11) Publication number: **0 197 655**
**A2**

(12) **EUROPEAN PATENT APPLICATION**

(21) Application number: **86301635.8**

(22) Date of filing: **07.03.86**

(51) Int. Cl.⁴: **B 67 D 1/10**
**B 67 D 5/56, B 01 F 15/04**
**G 01 F 11/06, G 01 F 11/02**

(30) Priority: **07.03.85 US 709098**

(43) Date of publication of application:
**15.10.86 Bulletin 86/42**

(84) Designated Contracting States:
**AT BE CH DE FR GB IT LI LU NL SE**

(71) Applicant: **Hume, Ronald W.**
**357 6th Avenue, N.**
**Tierra Verde Florida 33715(US)**

(72) Inventor: **Hume, Ronald W.**
**357 6th Avenue, N.**
**Tierra Verde Florida 33715(US)**

(74) Representative: **Tregear, George Herbert**
**Benjamin et al,**
**LLOYD WISE, TREGEAR & CO Norman House 105-109**
**Strand**
**London WC2R 0AE(GB)**

(54) Apparatus for reconstituting a concentrate.

(57) Apparatus (10) for mixing two liquids in desired proportion to provide and dispense a homogeneous beverage on demand in an individual portion, the apparatus including first (18) and second (42) cylinders with reciprocating pistons (24, 46) operable to respectively pump proportionate amounts of the first and second liquids during forward and backward strokes of the pistons, mixing means (32) for mixing the first and second liquids provided from the first and second cylinders, dispensing means (32) for receiving the liquids from the mixing means and discharging them through an outlet to an individual portion sized container, control means (68, 70) for initiating pumping by the first and second cylinders and pistons, and means for automatically terminating the pumping after the pistons have traveled predetermined distances corresponding to a volume of beverage equal to the individual portion. Also disclosed is using a piston sensing means to sense the position of the pistons and provide a control signal when the pistons have reached predetermined positions to cause the pistons to reverse direction.

FIG_1

# APPARATUS FOR RECONSTITUTING A CONCENTRATE

## Field of the Invention

This invention relates to improvements in the beverage dispensing industry. More particularly, it relates to an apparatus that reconstitutes a concentrate in a very precise ratio and that dispenses different amounts of reconstituted concentrate in very precise quantities independent of human judgment.

## Background of the Invention

Beverage dispensers are ubiquitous. Although the industry that supplies beverage dispensers to full-service restaurants, fast food restaurants, cafeterias, motels and the like is a large and growing industry, the industry is troubled by a number of seemingly intractable problems.

One major problem has been the inability of the industry to develop a dispensing apparatus that will reconstitute a concentrate accurately and consistently. Federal regulations require that reconstituted drinks sold in interstate commerce must have a minimum amount of concentrate before such drinks can be advertised or sold under the same name as the unreconstituted drink. For example, reconstituted orange juice must contain a certain percentage of orange juice. If the reconstituting process provides too much water or too little orange juice concentrate, or a combination of such conditions that has the same effect, then the product must be advertised and sold as an orange drink, not orange juice. The dispensing device currently in use by many restaurants in the United States is woefully inadequate in this regard. The machine typically over-dilutes the concentrate and owners of establishments having such machines have been placed in violation of the federal regulations just mentioned.

For example, a reconstituted orange juice must have a concentration of orange juice equal to at least twelve and one-half (12 1/2) "bricks." The machine currently in use nationwide dispenses reconstituted orange juice having a concentration that varies between seven (7) to seventeen (17) bricks. The lower figure violates the federal regulations unless the product is sold as orange drink. Of course, establishments which advertise the availability of orange juice on their premises do not change their advertisements on days when their machine is over-diluting. On the other hand, on days when the machine is under-diluting, the restaurant owner is wasting orange juice concentrate. In either event, the large deviation from the required 12.5 bricks is unacceptable. The industry has made many attempts over the years to bring the deviation down to acceptable levels, without success.

Another major problem with the devices of the prior art lies in their reliance on operator judgment as to when the dispensing process should be terminated. Careless employees

routinely overfill and underfill the beverage cups, and even the most conscientous of employees cannot control the filling operation with any high degree of precision. Again, the industry has made a number of unsuccessful attempts over the years to provide a machine that could dispense accurate amounts without the need for operator intervention.

Still another problem that plagues the dispensing devices currently in use is their inability to handle pulp of the type found in orange juice. Market studies have indicated that consumers prefer orange juice having pulp over orange juice having no pulp. However, the dispensing machines now in use were designed to handle syrup of the type mixed with water to provide soft drinks. The nozzles of these machines cannot dispense pulp in a satisfactory manner. Typically, the pulp gets caught in a constricted area, with the result that no drink can be dispensed from the clogged machine until it is cleaned.

There is a clear need in the industry for a device that will fill cups quickly and with the correct amount of reconstituted beverage each filling. Moreover, there is a need for a device that will perform the reconstitution of the concentrate in a highly consistent manner. There is also a need for a dispensing machine with a nozzle that can handle the presence of pulp. No device appears in the prior art that fulfills these needs.

0197655

- 4 -

## Summary of the Invention

In general, in one aspect the invention features apparatus for mixing two liquids in desired proportion to provide and dispense a homogeneous beverage on demand in an individual portion, said apparatus including first and second cylinders with reciprocating pistons operable to respectively pump proportionate amounts of the first and second liquids during forward and backward strokes of the pistons, mixing means for mixing the first and second liquids provided from the first and second cylinders, dispensing means for receiving the liquids from the mixing means and discharging them through an outlet to an individual portion sized container, control means for initiating pumping by the first and second cylinders and pistons, and means for automatically terminating the pumping after the pistons have traveled predetermined distances corresponding to a volume of beverage equal to the individual portion.

In preferred embodiments, the first cylinder is for connection to a source of liquid under pressure, the piston in the first cylinder is a driving piston, the first cylinder is connected to first valving means for alternately directing the first liquid to one side of the driving piston while receiving it from the other side and directing it to the other side while receiving it from the one side, the piston in the second cylinder is a driven piston driven by a mechanical connection to the driving piston, and the second cylinder is connected to second valving means for alternately providing the second liquid to opposite sides of the driven piston; there are position sensing means for sensing the position of the pistons and providing a control signal to the first valving means when the pistons have reached predetermined positions to cause the pistons to reverse direction, the position sensing means including first and second position sensors, and means for selectively connecting a position sensor to provide a control signal to the first valving means; the first valving means includes a first valve that alternately connects an end of the cylinder to a source of the pressurized liquid when in a supply position and to the mixing means when in a discharge position, the first valve being in the supply position when a control signal is received from the position sensing means and in the discharge position in the absence of the control signal, and a second valve that alternately connects the other end of the cylinder to the source of pressurized liquid when in a supply position and to the mixing means when in a discharge position, the second valve being in the discharge position when a control signal is received from the position sensing means and in the supply position in the absence of the control signal; the second valving means includes gravity return one-way valves; a first one-way valve is connected to permit flow into one side of the second cylinder of the second liquid, a second one-way valve is connected to permit flow from the one side of the second cylinder to the mixing means, a third one-way valve is connected to permit flow into the other side of the second cylinder of the second liquid, and a fourth one-way valve is connected to permit flow from the other side of the second cylinder to the mixing means; there is chamber means defining a generally cylindrical chamber for tangentially receiving the first and second liquids so as to provide swirling action in the chamber, the chamber means receiving the liquids from the mixing means and providing it to the dispensing means; there is a weir for liquid in the chamber; the weir is provided by an upper end of a tube that is concentrically mounted in the chamber and is located in the chamber at a position above the entrance of the liquid, and the dispensing means includes a lower end of the tube; the chamber includes a lower sub-chamber for receiving the liquids and an upper sub-chamber confluent with the lower sub-chamber but having a reduced diameter relative to the diameter of the lower sub-chamber, the upper end of the tube being in the upper sub-chamber, the tube having a diameter sufficient to allow flow of fruit juice pulp therethrough.

In another aspect, the invention features apparatus for mixing two liquids in desired proportion including first and second cylinders with reciprocating pistons operable to respectively pump proportionate amounts of the first and second liquids during forward and backward strokes of the pistons, mixing means for mixing the first and second liquids provided from the first and second cylinders and providing the mixed liquids to an outlet, piston direction means for causing the pistons to change between the forward strokes and backward strokes, and position sensing means for sensing the position of the pistons and providing a control signal to the piston direction means when the pistons have reached predetermined positions to cause the pistons to reverse direction.

In preferred embodiments, the control signal is an electrical signal; the position sensing means includes means for sensing two positions of a piston and also includes means for selectively providing the control signal when a piston has reached either of the two positions, to vary the volume of liquid supplied in each traverse of the piston; one position is at the end of travel of a piston in a cylinder, and the other position is at a predetermined location before end of travel in the cylinder; a rod is connected for sliding with a piston and extends from a cylinder, and the means for sensing the position includes means for sensing the position of the rod; the means for sensing the position of the rod includes two contact switches that are activated when contacted by movement of the rod; the valving means includes first and second valves that communicate with opposite ends of the first cylinder and are electrically connected to receive electrical control signals from the first and second position sensors; and the position sensing means includes a magnetic position sensor that senses the position of a magnet operably connected for movement with a piston.

- 8 -

Other advantages and features of the invention will be apparent from the following description of a preferred embodiment thereof and from the claims.


Description of the Preferred Embodiment

The drawings will be briefly described first.

Drawings

Fig. 1 is a perspective view of a beverage dispensing machine according to the invention.

Fig. 2 is a diagrammatic representation of the plumbing and other hardware of the Fig. 1 machine.

Fig. 3 is an electrical schematic showing the circuitry of the Fig. 1 machine.

Fig. 4 is a top plan view of a commercial embodiment of the invention, which commercial emobodiment differs in some details from the embodiment of Fig. 2 and from which a number of parts have been deleted to simplify the drawings;

Fig. 5 is a diagrammatic representation of a valve of the type employed in the embodiment of Fig. 4; and

Fig. 6 is a diagrammatic representation of the novel valve means employed in both embodiments of the invention.

Similar reference numerals refer to similar parts throughout the several views of the drawings.

Structure and Operation

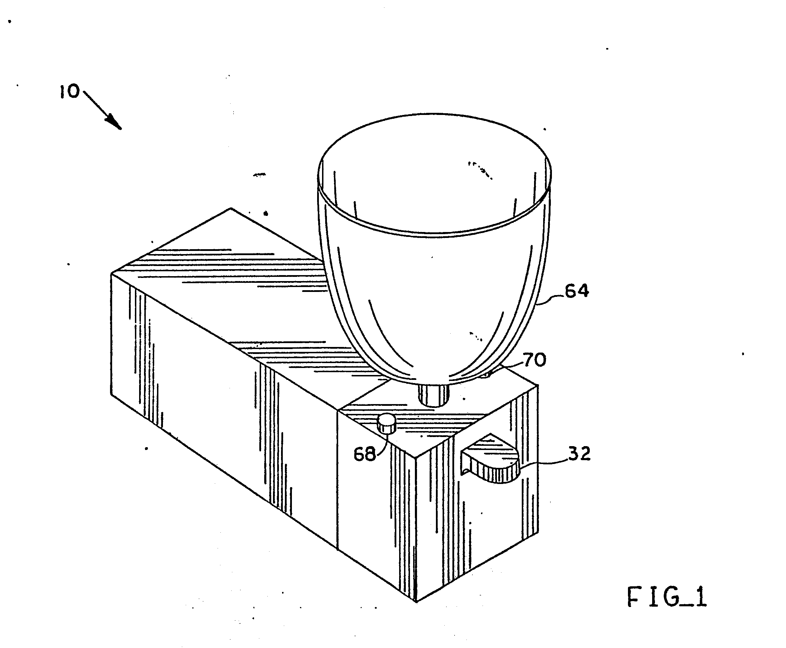

Referring now to Fig. 1, it will there be seen that the subject invention may be embodied in a small unit 10 of the type that may sit conveniently on a restaurant counter top and which occupies a small amount of space. The unit 10 includes nozzle 32, concentrate hopper 64, and call for service buttons 68 and 70 which are activated by the operator of the machine. The balance of the parts are enclosed within the housing.

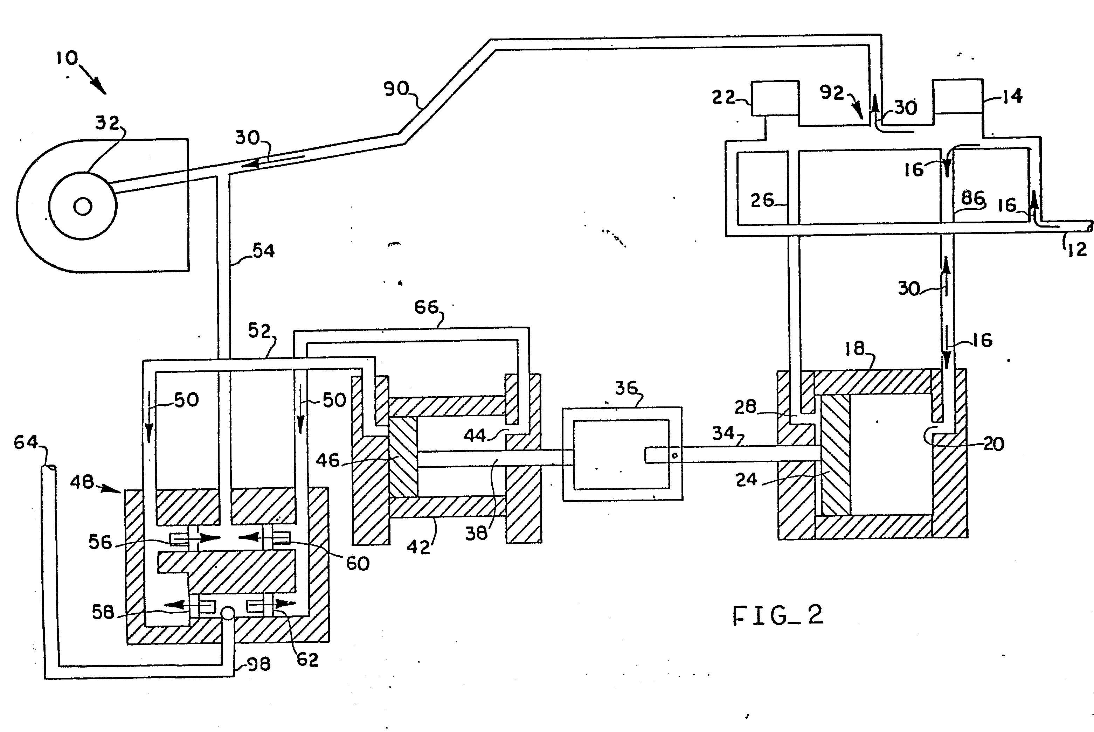

Referring next to Fig. 2, it will there be seen that a diagrammatic representation of an operative embodiment of the invention is designated 10 as a whole.

The apparatus 10 is coupled with a source of water under pressure, such as a municipal water supply, by a water-carrying hose 12 that appears on the right hand side of Fig. 2. Solenoid valves 14, 22 alternately connect opposite ends of cylinder 18 to water hose 12 or outlet tube 90, one end of the cylinder being connected to the water hose while the other is connected to the outlet and vice versa. In the at rest position, when machine 10 is not dispensing beverage, both pistons 24 and 46 rest at the right hand ends of the cylinders. Solenoid valve 14, in a supply position, its first position, allows the water under pressure to flow as indicated by the single headed arrows 16 to a first cylinder 18 having first port 20, and blocks flow from hose 12 or port 20 to outlet tube 90. In valve 14's second position, a discharge position, port 20 is connected to outlet tube 90 while hose 12 is isolated from these two. Solenoid valve 22, in a discharge position, its first position, permits flow from the opposite end of cylinder 18 to tube 90, but prevents water from hose 12

0197655

- 10 -

from entering cylinder 18 through port 28.  In valve 22's supply position, a second position, port 28 is connected to water hose 12 and is isolated from outlet tube 90.

The apparatus has two (2) modes, as aforesaid, being the ten ounce (10 oz.) and the six ounce (6 oz.) modes.  The operation of the apparatus when dispensing a 10 oz. reconstituted juice will be described first.

When the dispensing machine is activated by an operator to dispense a cup of orange juice, solenoid valves 14, 22 are switched to their first positions, and water entering port 20 drives slidably mounted piston 24, which is provided with suitable "O" rings, away from port 20 until it reaches the opposite end of cylinder 18.  Such position of the piston 24 is depicted in Fig. 2.

A first microswitch means, shown and described hereinafter but not shown in Fig. 2, is activated when piston 24 reaches the position shown in Fig. 2 and provides signals turning off the solenoid valves so that they return to their at rest second positions.  A first relay means, described and shown hereinafter, is activated by the first microswitch and causes solenoid valve valve members 14 and 22 switch to their respective second positions.  Thus, the water will now be directed by said valve members to flow through conduit means 26 to port 28 of cylinder 18.  This will effect the return stroke of piston 24, and the water that had driven the piston to its Fig. 2 position will be driven as at 30 to discharge nozzle 32 which is shown at the left hand side of Fig. 2.

Piston 24 is fixedly secured to a piston rod 34 that in turn is fixedly secured to a yoke member 36 that ties piston rod 34 to piston rod 38 of driven piston 40 which reciprocates in cylinder 42 in unison with the reciprocation of driving piston 24. The second cylinder 42 includes ports 44 and 46 which alternately direct concentrate in second cylinder 42 to a valving means indicated generally by the reference numeral 48. The flow of concentrate from ports 44, 46 is indicated by arrows 50.

Concentrate pumped from cylinder 42 through port 46 by piston 40 will be permitted to flow to nozzle 32 through hoses 52 and 54 by one-way valve 56. Valve 58 prevents flow of the concentrate back to the concentrate hopper 64 and valve 60 prevents the concentrate from re-entering cylinder 42. The unnumbered arrows on all of the one-way valves in the valving means 48 indicates the direction of fluid flow therethrough that is allowed.

Similarly, concentrate pumped from cylinder 42 through port 44 by piston 40 flows to nozzle 32 through hoses 66 and 54 via one-way valve 60. Valve 62 will block flow of the concentrate to the hopper 64 and valve 56 prevents reverse flow of the concentrate back to cylinder 42.

In the preferred embodiment of this invention, cylinder 18 has a volume three (3) times greater than the volume of cylinder 42. Thus, one (1) stroke of driving piston 24 displaces three (3) times as much water as the concentrate displaced by driven piston 40 during its stroke. Thus, where a six (6) ounce portion of a reconstituted concentrate is to be delivered to a cup positioned below nozzle 32, the 3:1 ratio will deliver one and one-half (1 1/2) ounces of concentrate and four and one-half (4 1/2) ounces of water to the nozzle where it is admixed and dispensed. Where a ten (10) ounce portion is to be dispensed, cylinder 42 will deliver two and one-half (2 1/2) ounces of concentrate to the nozzle and cylinder 18 will deliver seven and one-half (7 1/2) ounces of water thereto.

In a commercial embodiment of the invention, cylinders 18 and 42 dispense two and one-half (2 1/2) ounces and seven and one-half (7 1/2) ounces of concentrate and water, respectively, when the pistons disposed therein travel forward and backward once along the entire length of their respective cylinders. A second microswitch, shown and described hereinafter, is deactivated when a ten (10) ounce portion is being dispensed, but is activated when a six (6) ounce portion is being dispensed. The second microswitch is physically disposed so that it is tripped when driven piston 40 travels from the at rest position to the position shown in Fig. 2. When it is deactivated, the tripping has no effect and the device operates in the manner described above, but when the second microswitch is activated, the physical contact between such second microswitch and a tripping means (not shown, but which is rigidly connected to the yoke means 36 and disposed to contact such microswitch attendant travel of driven piston 40), such activation results in earlier activation of the three (3) way valves 14,· 22 mentioned earlier by the solenoids so that the piston 40 stops and begins its return stroke without traveling all of the way to the opposite side of its cylinder 42. In other words, activation of·a six (6) ounce call for service activates the microswitch disposed in the path of poston 40 so that the length of the piston stroke is shortened. In this manner, the same pistons, solenoids and three-way valves are employed for both the six (6) and ten (10) ounce calls for service, but a second relay means is employed to shorten the length of the piston stroke when it is desired to dispense a smaller quantity of reconstituted concentrate.

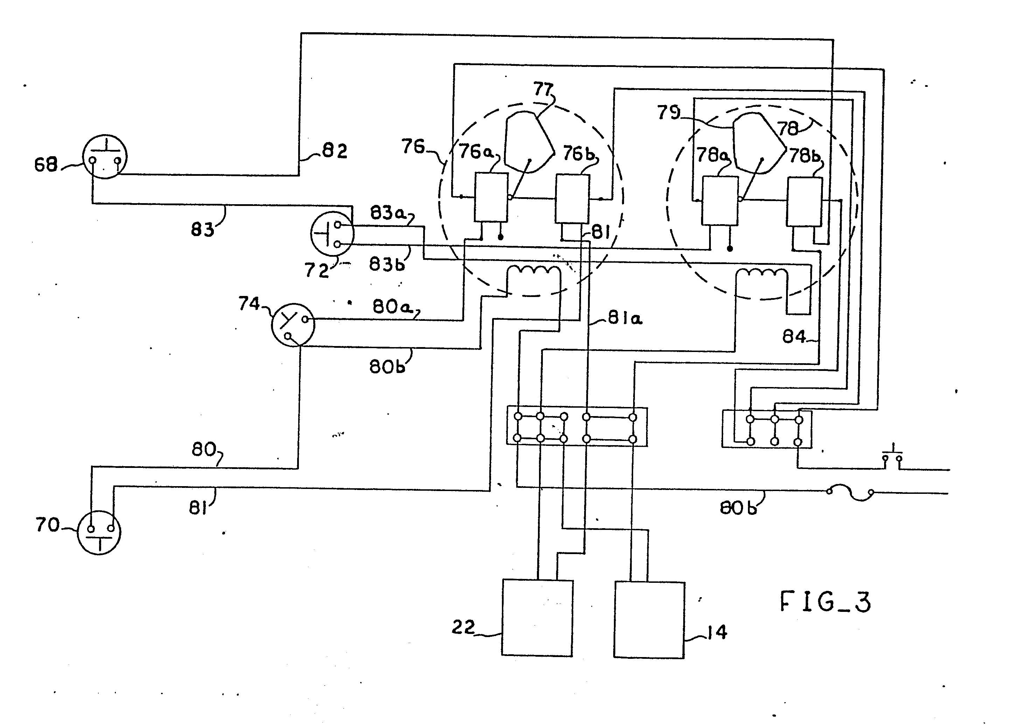

Since the microswitch that controls the six (6) ounce call for service is deactivated when a ten (10) ounce call for service is made, it is necessary to have a separate set of relay means for the six (6) and ten (10) ounce calls for service. Both the first and second set of relays are shown in Fig. 3, as are the first and·second microswitches referred to hereinabove. Accordingly, attention is now directed to Fig. 3.

The ten (10) ounce call for service switch is designated 68 and the six (6) ounce switch is designated 70 in Fig. 3, at the left.side thereof. The ten (10) ounce microswitch is indicated by the reference numeral 72, and the six (6) ounce microswitch is indicated as at 74. Microswitch 74 is shown inclined at an angle because in a commercial embodiment of the subject invention, it is disposed at a forty five (45) degree angle in the path of the rigid tripping means, mentioned above, that is fixedly secured to and projects outwardly from the yoke means 36 as aforesaid. The first relay means (120 VAC latching relay) 78, dedicated to the ten (10) ounce call for service, includes switches 78a and 78b which are alternately activated by toggle member 79 in a well-known manner. A second 120 VAC latching relay 76, which includes toggle member 77 and switches 76a and 76b, controls the six (6) ounce call for service. The electrical connections 80, 81, 80a, 80b, 81a and 82, 83m 83a, 83b, 84, and other unnumbered connections, indicate how elements 68, 70 (the call for service switches) are connected to their respective microswitches 72, 74, and their respective latching relays 78, 76.

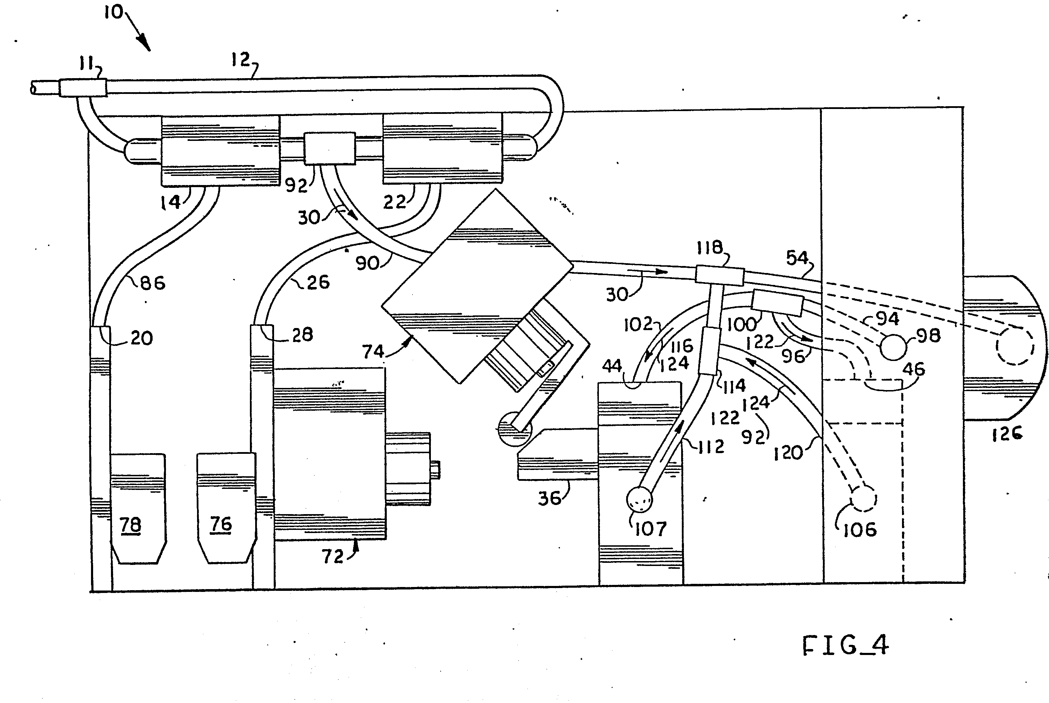

A number of structural details have been omitted from Fig. 4, as the purpose of such Fig. is to depict the conduit connections used in a commercial embodiment of the invention. Neither the driving nor the driven cylinder is shown in this Fig., although ports 20, 28 of the driving cylinder are indicated as are ports 44, 46 of the driven cylinder. Water supply pipe 12 is shown having a pressure regulator 11, and the three way valve members 14 and 22 are shown.

Flexible hose 86 interconnects valve 14 and port 20, hose 26 interconnects valve 22 and port 28, and hose 90 interconnects T connection 92 with the nozzle 32.

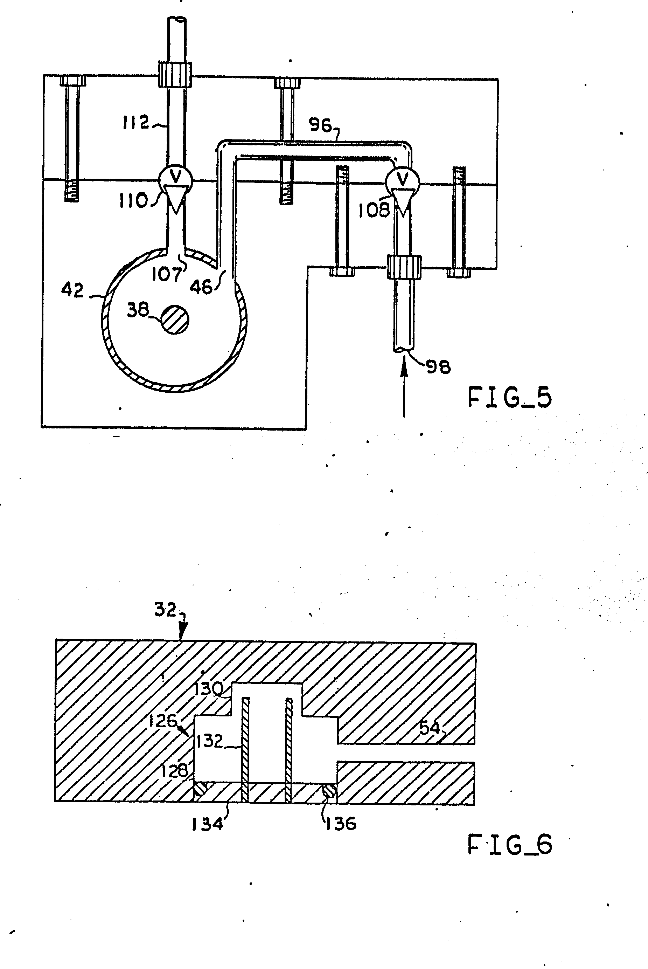

That part of the embodiment of Fig. 4 already pointed out is not different from the embodiment of Fig. 2. However, the hosing connections generally indicated by the reference numeral 92 in the left hand portion of Fig. 4 are different from the connections shown in Fig. 2 because valving mechanism 48 of Fig. 2 is not used in the Fig. 4 embodiment. The details of the valving means of Fig. 4 are shown in Fig. 5.

Accordingly, attention is now directed to Fig. 5 wherein cylinder 42 is shown in transverse section. Port 46 is depicted, although it should be understood that port 44 is spaced "behind" port 46 in this view. Returning briefly to Fig. 4, it will there be seen that concentrate from hopper 64 (Figs. 1 and 2) enters port 46 through inlet hoses 94 and 96 from hopper outlet 98. As also shown in Fig. 4, hoses 94, 96 meet in a T connection 100 which also joins inlet hose 102 to port 44.

An important difference in the cylinder 42 of the Fig. 4 embodiment vis a vis the Fig. 2 embodiment is the provision of a pair of discharge ports 106, 107, both of which are shown in Fig. 4. The novel arrangement of parts which is perhaps best understood in connection with Fig. 5, further includes one-way, gravity responsive valve members 108 and 110 as well as another gravity responsive valve just like valve 108 that opens and shuts conduit 102 (Fig. 4). Concentrate exiting hopper 64 at its outlet 98 under suction will transiently unseat valve 108 and enter cylinder 42 at port 46. Concentrate being simultaneously pumped out of cylinder 42 by piston 40 (carried by piston rod 38, shown in Fig. 5), will unseat valve 110 and flow to nozzle 32 via hose 112 (Figs. 4 and 5), T connection 114, hose 116, T connection 118 and hose 54 (Fig. 4 only).

At the same time, the concentrate will be blocked from entering port 44 by its one way valve, not shown, but which corresponds to valve 108 in Fig. 5, as aforesaid.

As piston 40 executes its return stroke, the one way valves 108 and 110 will seal their respective openings and concentrate will be drawn into port 44 at the opposite end of the cylinder attendant unseating of its valve. Accordingly, concentrate will then be pumped to nozzle 32 via conduit 120, T connection 114, hose 116, T connection 118, and hose 54, all as is shown in Fig. 4.

In other words, concentrate indicated by arrows 122 in Fig. 4 will flow as shown during a first stroke of the driven piston, and will flow as depicted by arrows 124 during the return stroke of the piston, and reverse flows of each flow will be blocked at the proper times by the gravity fed one way valves.

As shown in Fig. 4, hose 54 delivers concentrate and water to the nozzle 32 in a tangential manner to aid in the mixing thereof.

Referring finally to Fig. 6, hose 54 is shown entering a cylindrical chamber 126 that is formed interiorly of nozzel 32. The chamber 126 includes an enlarged lower portion 128 and a smaller upper portion 130 of reduced diameter. An upstanding tubular member or nozzle 132 is disposed centrally of the chamber 126. A sealing means 134, which includes O ring 136, seals the chamber against leakage.

The mixture of concentrate and water within chamber 126 must reach the level represented by the top of nozzle 132 before such mixture can be discharged. Since conduit 54, delivers the water/concentrate to the lower chamber 128, a thorough mixing of the same will have occurred by the time the level of the mixture reaches the top of nozzle 132. Thus, the nozzle 132 is understood as an overflow valve for chamber 126. Due to the relatively large diameter of nozzle 32, orange juice pulp can easily flow therethrough and enter the consumer's cup.

## Other Embodiments

Other emodiments of the invention are within the scope of the following clause. For example, instead of microswitches, magnetic position sensing switches operating under the Hall effect principle could be used to sense the position of a magnet mounted on the end of a rod connected to a piston and extending from the respective cylinder.

0197655

- 1 -

<u>CLAIMS</u>

1. Apparatus for mixing two liquids in desired proportion to provide and dispense a homogeneous beverage on demand in an individual portion, said apparatus.comprising

first and second cylinders with reciprocating pistons operable to respectively pump proportionate amounts of said first and second liquids during forward and backward strokes of said pistons,

mixing means for mixing said first and second liquids provided from said first and second cylinders,

dispensing means for receiving said liquids from said mixing means and discharging them through an outlet to an individual portion sized container,

control means for initiating pumping by said first and second cylinders and pistons, and

means for automatically terminating said pumping after said pistons have traveled predetermined distances corresponding to a volume of beverage equal to said individual portion.

2. The apparatus of claim 1 wherein said first cylinder is for connection to a source of liquid under pressure, said piston in said first cylinder is a driving piston, said first cylinder is connected to first valving means for alternately directing said first liquid to one side of said driving piston while receiving it from the other side and directing it to the other side while receiving it from said one side, said piston in said second cylinder is a driven piston driven by a mechanical connection to said driving piston, and said second cylinder is connected to second valving means for alternately providing said second liquid to opposite sides of said driven piston.

3. The apparatus of claim 1 wherein there are piston direction means for causing said pistons to change between said forward strokes and backward strokes and position sensing means for sensing the position of said pistons and providing a control signal to said piston direction means when said pistons have reached predetermined positions to cause said pistons to reverse direction.

4. The apparatus of claim 3 wherein said control signal is an electrical signal.

5. The apparatus of claim 4 wherein said position sensing means includes means for sensing two positions of a said piston and also includes means for selectively providing said control signal when a said piston has reached either of said two positions, to vary the volume of liquid supplied in each traverse of said pistons.

6. The apparatus of claim 5 wherein one said position is at the end of travel of a said piston in a said cylinder from one end of the cylinder to the other, and the other position is at a predetermined location before end of travel in said cylinder.

7. The apparatus of claim 4 further comprising a rod that is connected for sliding with a said piston and extends from a said cylinder, and wherein said means for sensing the position includes means for sensing the position of said rod.

8. The apparatus of claim 7 wherein said means for sensing the position of said rod includes two contact switches that are activated when contacted by movement of said rod.

9. The apparatus of claim 2 further comprising position sensing means for sensing the position of said pistons and providing a control signal to said first valving means when said pistons have reached predetermined positions to cause said pistons to reverse direction,

said position sensing means comprising first and second position sensors, and means for selectively connecting a said position sensor to provide a control signal to said first valving means.

10. The apparatus of claim 9 wherein the connections between said first and second position sensors and said first valving means are independent of each other.

11. The apparatus of claim 9 wherein said valving means includes first and second valves that communicate with opposite ends of said first cylinder and are electrically connected to receive electrical control signals from said first and second position sensors.

12. The apparatus of claim 9 wherein said first valving means includes

a first valve that alternately connects an end of said cylinder to a source of said pressurized liquid when in a supply position and to said mixing means when in a discharge position, said first valve being in said supply position when control signal is received from said position sensing means and in said discharge position in the absence of said control signal, and

a second valve that alternately connects the other end of said cylinder to said source of pressurized liquid when in a supply position and to said mixing means when in a discharge position, said second valve being in said discharge position when a control signal is received from said position sensing means and in said supply position in the absence of said control signal.

13. The apparatus of claim 2 wherein said second valving means includes gravity return one-way valves.

14. The apparatus of claim 13 wherein a first said one-way valve is connected to permit flow into one side of said second cylinder of said second liquid, a second said one-way valve is connected to permit flow from said one side of said second cylinder to said mixing means, a third said one-way valve is connected to permit flow into the other side of said second cylinder of said second liquid, and a fourth said one-way valve is connected to permit flow from said other side of said second cylinder to said mixing means.

15. The apparatus of claim 1 further comprising chamber means defining a generally cylindrical chamber for tangentially receiving said first and second liquids so as to provide swirling action in the chamber, said chamber means receiving said liquids from said mixing means and providing it to said dispensing means.

16. The apparatus of claim 15 further comprising a weir for liquid in said chamber.

17. The apparatus of claim 16 wherein said weir is provided by an upper end of a tube that is concentrically mounted in said chamber and is located in said chamber at a position above the entrance of said liquid, and said dispensing means includes a lower end of said tube.

18. The apparatus of claim 17 wherein said chamber includes a lower sub-chamber for receiving said liquids and an upper sub-chamber confluent with said lower sub-chamber but having a reduced diameter relative to the diameter of the lower sub-chamber, said upper end of said tube being in said upper sub-chamber, said tube having a diameter sufficient to allow flow of fruit juice pulp therethrough.

19. Apparatus for mixing two liquids in desired proportion comprising

first and second cylinders with reciprocating pistons operable to respectively pump proportionate amounts of said first and second liquids during forward and backward strokes of said pistons,

mixing means for mixing said first and second liquids provided from said first and second cylinders and providing the mixed liquids to an outlet,

piston direction means for causing said pistons to change between said forward strokes and backward strokes, and

position sensing means for sensing the position of said pistons and providing a control signal to said piston direction means when said pistons have reached predetermined positions to cause said pistons to reverse direction.

20. The apparatus of claim 19 wherein said first cylinder is for connection to a source of liquid under pressure, said piston in said first cylinder is a driving piston, said first cylinder is connected to first valving means for alternately directing said first liquid to one side of said driving piston while receiving it from the other side and directing it to the other side while receiving it from said one side, said piston in said second cylinder is a driven piston driven by a mechanical connection to said driving piston, and said second cylinder is connected to second valving means for alternately providing said second liquid to opposite sides of said driven piston.

21. The apparatus of claim 20 wherein said control signal is an electrical signal.

22. The apparatus of claim 20 wherein said position sensing means includes means for sensing two positions of a said piston and also includes means for selectively providing said control signal when a said piston has reached either of said two positions, to vary the volume of liquid supplied in each traverse of said pistons.

23. The apparatus of claim 22 wherein one said position is at the end of travel of a said piston in a said cylinder from one end of the cylinder to the other, and the other position is at a predetermined location before end of travel in said cylinder.

24. The apparatus of claim 21 further comprising a rod that is connected for sliding with a said piston and extends from a said cylinder, and wherein said means for sensing the position includes means for sensing the position of said rod.

25. The apparatus of claim 24 wherein said means for sensing the position of said rod includes two contact switches that are activated when contacted by movement of said rod.

26. The apparatus of claim 25 wherein said valving means includes first and second valves that communicate with opposite ends of said first cylinder and are electrically connected to receive electrical control signals from said first and second position sensors.

27. The apparatus of claim 22 wherein said first valving means includes

a first valve that alternately connects an end of said cylinder to a source of said pressurized liquid when in a supply position and to said mixing means when in a discharge position, said first valve being in said supply position when control signal is received from said position sensing means and in said discharge position in the absence of said control signal, and

a second valve that alternately connects the other end of said cylinder to said source of pressurized liquid when in a supply position and to said mixing means when in a discharge position, said second valve being in said discharge position when a control signal is received from said position sensing means and in said supply position in the absence of said control signal.

28. The apparatus of claim 3 or 19 wherein said position sensing means comprises a magnetic position sensor that senses the position of a magnet operably connected for movement with movement of a said cylinder.

FIG_1

0197655

FIG_2

FIG_3

0197655

FIG_4

0197655

FIG_5

FIG_6